Europäisches Patentamt

European Patent Office

Office européen des brevets

(19)

(11) EP 0 642 740 B1

(12) **EUROPEAN PATENT SPECIFICATION**

(45) Date of publication and mention
of the grant of the patent:
**13.06.2001 Bulletin 2001/24**

(21) Application number: **94910536.5**

(22) Date of filing: **25.03.1994**

(51) Int Cl.[7]: **A23C 9/127**, A23C 9/13

(86) International application number:
**PCT/JP94/00482**

(87) International publication number:
**WO 94/22317 (13.10.1994 Gazette 1994/23)**

(54) **FERMENTED MILK AND PROCESS FOR PRODUCING THE SAME**

FERMENTIERTE MILCH UND VERFAHREN ZUR HERSTELLUNG

LAIT FERMENTE ET PROCEDE DE PRODUCTION

(84) Designated Contracting States:
**DE FR NL**

(30) Priority: **26.03.1993 JP 9215993**

(43) Date of publication of application:
**15.03.1995 Bulletin 1995/11**

(73) Proprietor: **SNOW BRAND MILK PRODUCTS CO.,
LTD.
Sapporo-shi, Hokkaido 065 (JP)**

(72) Inventors:
  • **HIRANO, Ryogo
    Kawagoe-shi, Saitama 350 (JP)**
  • **OOKA, Minoru
    Tokorozawa-shi, Saitama 359 (JP)**
  • **NAKADA, Mayumi
    Tokorozawa-shi, Saitama 359 (JP)**
  • **YAMAMOTO, Takashi
    Kawagoe-shi, Saitama 350 (JP)**

(74) Representative: **Boeters, Hans Dietrich, Dr. et al
Patentanwälte Boeters & Bauer,
Bereiteranger 15
81541 München (DE)**

(56) References cited:
**EP-A- 0 073 629        EP-A- 0 184 267
EP-A- 0 519 127        WO-A-92/13064
JP-A- 63 226 243**

• **DATABASE FSTA INTERNATIONAL FOOD
INFORMATION SERVICE (IFIS),
FRANFURT/MAIN, DE 92-03-p0081, J. TEGGATZ
ET AL. 'Changes in the rheology and
microstructure of ropy yoghurt during shearing'
& FOOD STRUCTURE , vol. 9, no. 2, 1990 pages
133-138,**
• **DATABASE WPI Week 8746 Derwent
Publications Ltd., London, GB; AN 87-323359 &
JP-A-62 228 224 (GLICO KYODO NYUGYO)**
• **MILCHWISSENSCHAFT , vol. 40, no. 9, 1985
pages 526-529, E. RENNER 'Untersuchungen zur
Eiweissanreicherung von Joghurt 3. Einfluss auf
die Produktqualität'**
• **AUSTRALIAN JOURNAL OF DAIRY
TECHNOLOGY , vol. 39, no. 1, 1984 pages 33-35,
N. GUIRGUIS ET AL. 'The effect of partial
replacement of skim milk powder with whey
protein concentrate on the viscosity and
syneresis of yoghurt'**
• **FUNDAMENTAL OF DAIRY CHEMISTRY, second
edition, by Byron H. Webb, Arnold H. Johnson,
John A. Alfrod, pages 36-37**

## Description

Field of the Invention

This invention relates to a fermented milk with smooth construction and reduced separation of whey and a processes for the production thereof. The fermented milk has fine velvety texture and smooth construction, thus mildly disintegrate in the mouth with excellent sensory taste.

Background of the Invention

Fermented milk is prepared by inoculation of lactic acid bacteria such as <u>Lactobacillus delbrueckii</u> subsp. <u>bulgaricus</u>, <u>Streptococcus salivarius</u> subsp. <u>thermophilus</u>, <u>Lactobacillus acidophilus</u> and <u>Bifidobacterium</u> species to milk or raw milk with added sweeteners, flavors, stabilizers and so forth, hereinafter called yogurt mix, followed by fermentation. The lactic acid bacteria produce lactic acid during fermentation process and the produced lactic acid lowers pH of the fermented mixture to form gel by coagulation of milk protein and to give fermented milk.

The mechanism of gelling of fermented milk is not completely elucidated but its physical properties are largely depend on the fermentation conditions of lactic acid bacteria and strict control of the quality of raw materials, activity of the microorganisms and fermentation temperature are required to give product with satisfactorily quality. However, no complete and satisfactory fermented milk has always been obtained and numerous physical problems such as separation of whey, and coarse and rough construction remain to be solved. Particularly, consumers tend to dislike the separation of whey. Generally, stabilizers such as gelatin, pectin and agar, and whey protein concentrate (WPC) have been added to fermented milk to give products with suitable hardness and improved water retention, and soft and pleasant feeling to the tongue.

However, ameliorated water retention and smoothness by the addition of physical property improving agents such as stabilizers resulted in raised hardness and coarse and rough feeling in the mouth. Heretofore, selection of optimal strain of lactic acid bacteria and modifications of production conditions have been applied in addition to the use of stabilizers for the prevention of separation of whey. However, no satisfactorily fermented milk has still been obtained. For example, World Published Patent Application WO 92/13064 discloses the addition of peroxidase at concentrations of one mg/L or over to the fermented milk to suppress the excessive raise of acidity of the products during distribution and storage, and to maintain suitable acidity during palatable period. Japanese Published Unexamined Patent Application (Japan Kokai) No. 228224 (1987) discloses the production of lactic acid bacteria fermented foods by the addition of peroxidase and thiocyanic acid ion and/or halogen ion and storage under 10°C for the prevention of microbial rancidity, extension of storage period and removal of mutagenicity. Mere addition of peroxidase to the fermented milk, however, could not provide fermented milk with smooth construction without separation of whey. Therefore, one object of the present invention is to provide a fermented milk with smooth construction and less whey off.

Disclosure of the Present Invention

The object of the present invention is to solve above mentioned problems and relates to fermented milk comprising added peroxidase and WPC and/or WPI and exhibiting a viscosity change of b = $\log_{(\gamma_1/\gamma_2)}(\eta_2/\eta_1)$ of more than 0.17 in the shear rate dependency tests of viscosity in the shear rate ($\gamma$) from $10^{-1}s^{-1}$ to $10^2s^{-1}$, wherein $\gamma$ is a shear rate of the unit $s^{-1}$, $\eta$ indicates a viscosity of the unit Pa·S, $\gamma_1$ is a shear rate at one measuring point at a viscosity of $\eta_1$, and $\gamma_2$ is a shear rate at another measuring point at a viscosity of $\eta_2$, provided that $\gamma_1 < \gamma_2$. This invention also relates to a process for the production of the fermented milk by fermentation of a mixture of yogurt mix, peroxidase and whey protein condensate (WPC) and/or whey protein isolate (WPI) with lactic acid bacteria.

Hereinafter WPC cumulatively represents including WPI.

Brief Description of the Drawings

Fig. 1 shows strain dependency of dynamic moduli of elasticity of fermented milk obtained in Example 1 and Comparative example 1.

Fig. 2 shows shear rate dependencies of viscosity of fermented milk obtained in Example 1 and Comparative example 1.

Fig. 3 shows separation rates from water, whey off, of fermented milks obtained in Example 1 and Comparative example 1.

Fig. 4 shows the changes of pH during fermentation in Example 1 and Comparative example 1.

Fig. 5 shows strain dependency of dynamic moduli of elasticity of fermented milk obtained in Example 2 and Comparative example 2.

Fig. 6 shows shear rate dependencies of viscosity of fermented milk obtained in Example 2 and Comparative example 2.

Fig. 7 shows separation rates from water of fermented milks obtained in Example 2 and Comparative example 2.

Fig. 8 shows shear rate dependency of viscosity of commercial fermented milk product A.

Fig. 9 shows shear rate dependency of viscosity of commercial fermented milk product B.

The Best Mode for the Practice of the Present Invention.

The shear rate dependency test of viscosity of fermented milk of the present invention is carried out by determination of viscosity in the range of $\gamma = 10^{-1}S^{-1}$-$10^2S^{-1}$ with a thin disk cut out at one mm thickness and 50 mm diameter, and upper plate of 50 mm titanium parallel plate in a dynamic elasticity determination apparatus (RFS-2, Rheometrics Co., Ltd.) under ambient temperature of $10°C$ . This range of determination largely depends on the sharing rate of fermented milk and correctly determine the changes of viscosity and the smoothness of constructions. The fermented milk of the present invention shows lowest decline rate of viscosity expressed by an equation of $b = \log(\gamma_1/\gamma_2)(\eta_2/\eta_1)$ wherein b represents slope of over 0.17, preferably 0.20 or over in the above mentioned range. When b express less than 0.17, then the product loses fine grain accompanying plenty of whey off and results in poor disintegration in the mouth and flavor.

Fermented milks which satisfy above mentioned conditions are produced by the processes shown below. That is, milk is used as a major component and additives such as sweeteners, stabilizers and flavors are added, if desired. furthermore WPC including WPI is added to give yogurt mix preferably containing 8-15% of solid mass. Whole milk, skim milk optionally with added milk fat such as butter or butter oil can be used as the major component milk. Furthermore, recombined milk prepared by adding aqueous medium such as water or raw milk to dried and pulverized whole milk or skim milk may be used. Any WPC isolated and recovered from whey can be used and is added to the mix at ratios of 0.05-3.0, preferably 0.2-1.0 w/w%. Addition of WPC at 0.05 w/w% or less insufficiently raises the hardness of fermented milk and the addition at 3.0 w/w% or over may affect the taste and results in hardness of fermented milk beyond the suitable range. Thus, above mentioned range of addition is desired. The stabilizer must be added at a low concentration when there is abundant skim milk solid and <u>vice versa</u> to suitably modify the hardness of the fermented milk.

A peroxidase is added directly or together with a starter culture of lactic acid bacteria, which will be described later, to the prepared yogurt mix at ratios of 0.2 Unit/g or over, preferably 1-2 Unit/g calculated from ABTS method or one $\mu$ g/g or over, preferably 5-10 $\mu$ g/g in weight ratio. The peroxidase may be added over 10 $\mu$ g/g in some species of lactic acid bacteria if they do not greatly disturb the fermentation. However, addition of 0.2 Unit/g or over is preferable because of poor results with the addition of less than 0.2 Unit/g.

Single addition of peroxidase can provide smoothness to the fermented milk and prevention of separation of whey in some extent, however, further addition of a yogurt mix containing WPC, that is a combination with WPC may provide synergistic effect. The principle of the synergistic effect is not completely elucidated but the combination with peroxidase improves smoothness and water retention with reduced hardness, and a supplementary effect which allows addition of a larger amount of a stabilizer can be obtained. Addition of an excessive amount of a stabilizer in the absence of peroxidase and WPC not only raises hardness but also results in fragility of the fermented milk. However, the combination of a peroxidase and WPC effectively suppresses the fragility within the desired range of hardness of yogurt and provides satisfactory water retention and construction with smooth disintegration in the mouth even in the addition of excessive stabilizers. The produced fermented milk demands the predetermined peroxidase activity only during the production and may lose its activity after the completion of production.

The peroxidases used in the present invention are a group of enzymes which widely distribute in plants and animal milk and having molecular weight of about 80,000-90,000. Commercial peroxidases extracted from horse radish or the other plants can be used but lactoperoxidase isolated from milk is preferably used. The milk lactoperoxidase can be isolated in the process for the separation of lactoferrin from skim milk or whey (Japanese Unexamined Publication of Patent Application (Japan Kokai) No. 109400A1 (1991)). The peroxidase has one mole of iron in one mole active group protohemin, and shows greenish brown in concentrated solution and reacts with hydrogen peroxide as an oxidizing catalyst in the equation shown below:

$$H_2O_2 + AH_2 \rightarrow 2H_2O + A$$

The physiological function of the enzyme to microorganisms such as lactoperoxidase derived from milk shows antimicrobial activity such as antibacterial activity against Gram negative bacteria in the presence of thiocyanic acid ion and hydrogen peroxide, and bacteriostatic activity against Gram positive bacteria. The activity is considered to depend on the damages of cell membrane with hypocyanic acid ion ($OSCN^-$) partly formed from thiocyanate ion ($SCN^-$) and called LP system.

Lactic acid bacteria are then added to the yogurt mix prepared by methods shown above. The lactic acid bacteria include such as <u>Lactobacillus delbrueckii</u> subsp. <u>bulgaricus</u>, <u>Streptococcus salivarius</u> subsp. <u>thermophilus</u>, <u>Lactobacillus acidophilus</u>, <u>Streptococcus cremoris</u> and <u>Bifidobacterium</u> species. These bacteria can be used singly or in combination. The fermentation is carried out in a similar manner with those of conventional processes for the production of fermented milk at 25-50°C for 3-20 hrs. after the addition of lactic acid bacteria to the prepared yogurt mix. The sharing rate dependency test of fermented milk is performed after the fermented milk showed desired acidity with fermentation by combination of yogurt mix, WPC and peroxidase.

The fermented milk having lowest decline of viscosity expressed by a viscosity change of wherein b = $\log(\gamma_1/\gamma_2)$ $(\eta_2/\eta_1)$ represents variables of b > 0.17, in the range of shear rate $\gamma = 10^{-1}s^{-1}\text{-}10^2s^{-1}$ gives fermented milk with smooth construction and good flavor without separation of whey by a synergistic effect of WPC and peroxidase.

The present invention will be explained more in detail by the examples of the process for the production of fermented milk of the present invention and comparative examples.

Examples and comparative examples

Example 1

In a medium composed of 12% skim milk solution, Lactobacillus delbrueckii subsp. bulgaricus (SBT-2118) and Streptococcus salivarius subsp. thermophilus (SBT-1019) were inoculated and cultured at 32°C for 16 hrs. to give a lactic acid bacteria starter. In a yogurt mix mainly composed of milk containing 50 w/w% of raw milk, 4.0 w/w% of skim milk, 0.67 w/w% of salt-free butter, 0.75 w/w% of WPC, 9.5 w/w% of sucrose and 0.1 w/w% of yogurt flavor was prepared, pasteurized at 90°C for 10 min. and cooled to 41°C. In the resultant yogurt mix, aseptically prepared two Unit/g of lactoperoxidase (Sodelac Co., Ltd.) solution by filtration through a membrane filter having pore size of 0.22μm. Additionally, the prepared lactic acid bacteria starter was added at ratio of 3 w/w% and the mixture was filled in an 100 ml volume yogurt cup. The mixture was fermented at 41°C till 0.8% acidity of lactic acid and cooled to give a hard type yogurt. The results of shear rate dependency test will be described later.

Comparative example 1

The starter of lactic acid bacteria and yogurt mix were prepared by similar manners with those of Example 1 except for without addition of lactoperoxidase and the resultant mixture was fermented by similar conditions with those of Example 1 to give a fermented milk.

The strain dependency of dynamic elasticity, shear rate dependency of static viscosity and the rate of separation from water, whey separation, were determined for the fermented milk products obtained by Example 1 and Comparative example 1.

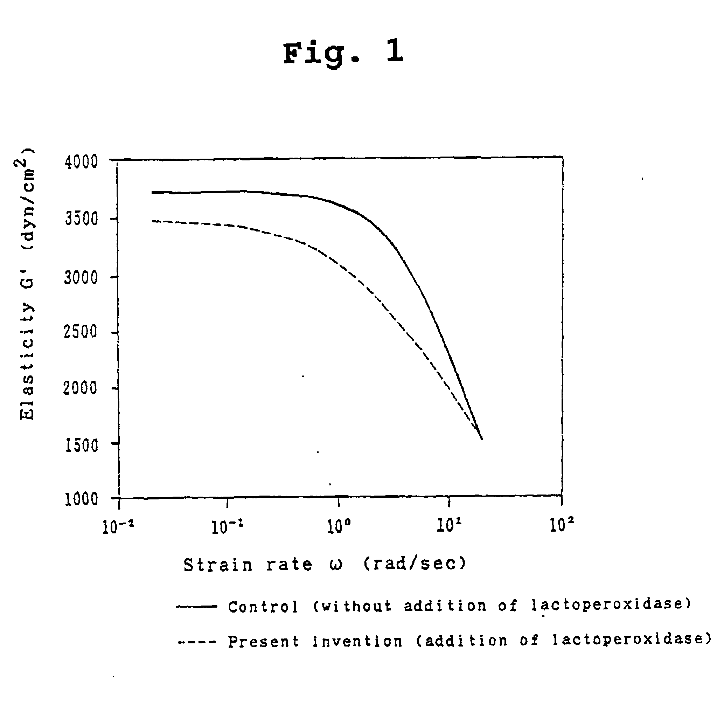

Yogurts obtained in Example 1 and Comparative example 1 were sliced to give disks of one mm in thickness and 50 mm diameter and determined with a dynamic viscoelasticity measurement apparatus (RFS-1, Rheometrics Co., Ltd.) at 10°C. A titanium parallel plate of 50 mm was used as an upper plate. Fig. 1 shows the strain dependency of dynamic elasticity at frequency of ω = 10 rad/sec. The sample with added peroxidase showed a lower dynamic elasticity in comparison to that of Comparative example 1 indicating more soft construction of the yogurt in Example 1. The sample obtained by Example 1 showed a slower decline in elasticity with the increase of distortion factor compared to that of Comparative example 1. These data indicate that the sample obtained by Example 1 with added peroxidase has durable construction.

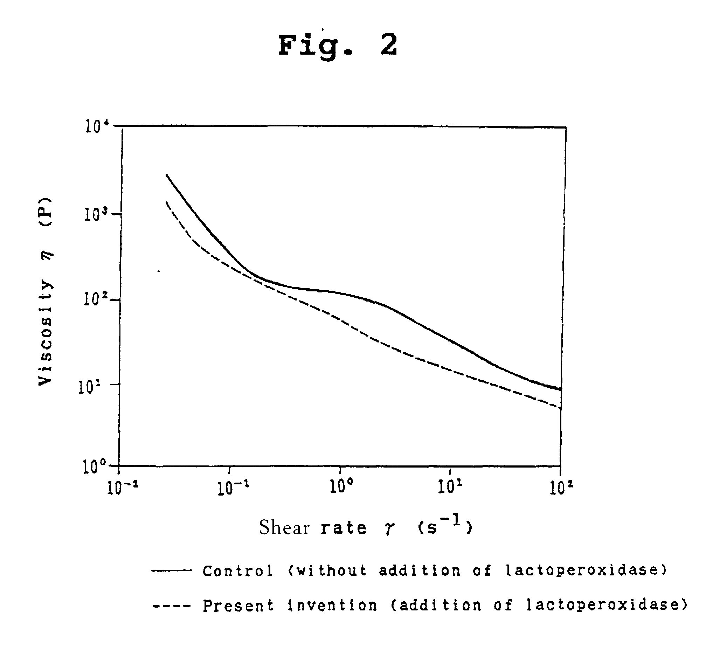

Fig. 2 shows the sharing rate dependency of static coefficient of viscosity. The sample obtained in Comparative example decreases viscosity with the increase of shear rate due to destruction of gel particles. Elevation of sharing rate $\gamma \geqq 3 \times 10^{-1}s^{-1}$ temporarily stops the decrease of viscosity and loses sharing rate dependency. Under these conditions, weak bindings between particles come off and gel particles with comparatively stronger bindings remain. These comparatively stronger bindings also come off by further increase of shear rate and viscosity decreases. The fermented milk sample obtained by Comparative example 1, which once reduced the shear rate dependency in a particular range has poor disintegration in the mouth, rough grain and lacks smoothness. On the other hand, the fermented milk sample obtained by Example 1 with added peroxidase has less decrease of shear rate dependency and disintegrate smoothly in the mouth with fine homogenous gel construction. The minimum slope in the range of $\gamma = 3 \times 10^{-1}s^{-1}\text{-}1 \times 10^2s^{-1}$ was applied to the equation b = $\log(\gamma_1/\gamma_2)$ $(\eta_2/\eta_1)$ and the sample of Example 1 with added peroxidase gave b = 0.3, while the sample of Comparative example 1 without addition of peroxidase gave b = 0.09.

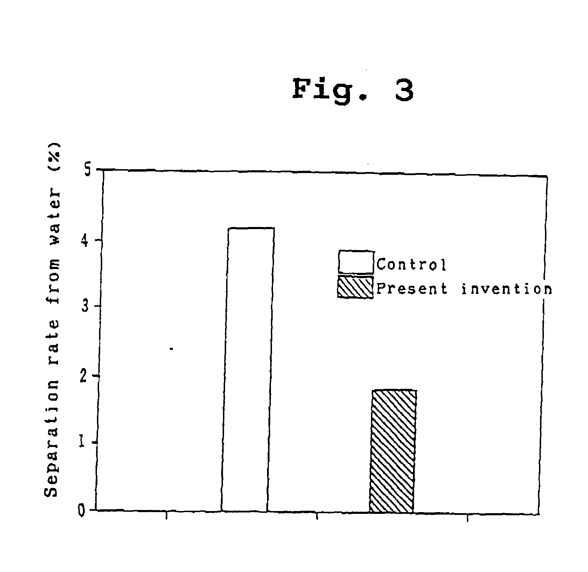

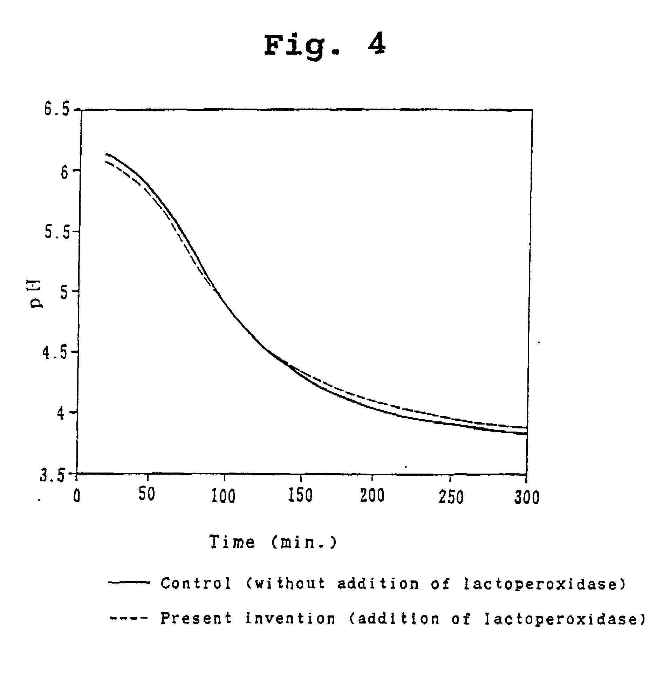

Fig. 3 shows the separation rate from water or whey separation, which express w/w% of leached out water from the sample placed at an angle of 70° for one hour. The sample obtained by Example 1 with added peroxidase showed less separation rate in comparison to that of Comparative example 1 indicating very stable construction. Fig. 4 shows the changes of pH during fermentation. The required periods to obtain finished acidity showed no marked difference between those of Example 1 and Comparative example 1 without affecting the actual production.

Example 2

In a medium composed of 12 w/w% of skim milk and 0.5 w/w% of yeast extract, a mixed subculture of Lactobacillus acidophilus (SBT-2062) and Streptococcus salivarius subsp. thermophilus (SBT-1035) was inoculated and cultured at 32°C for 16 hrs. to give a starter culture 1.

In a medium composed of 12 w/w% of skim milk, 0.5 w/w% of yeast extract and 0.05 w/w% of ascorbic acid, Bifidobacterium longum (SBT-2933R) was inoculated and cultured at 32°C for 16 hrs. to give a starter culture 2.

A yogurt mix mainly composed of milk containing 50 w/w% of raw milk, six w/w% of skim milk, 1.45 w/w% of butter and 0.5 w/w% of WPI was prepared. The yogurt mix was pasteurized at 90°C for 10 min., cooled to 40°C, and two Unit/g of lactoperoxidase was added similarly to that of Example 1. Above mentioned starters 1 and 2 were inoculated to the yogurt mix at ratios of five w/w%, respectively, and filled in a 100 ml volume yogurt cup and fermented at 38°C until acidity of lactic acid reach 0.85%. The fermented milk was cooled to give a plain yogurt.

Comparative example 2

Starters 1 and 2 were prepared with lactic acid bacteria by similar manners with those of Example 2. A plain yogurt was prepared by a similar fermentation method with that of Example 2 with a yogurt mix prepared according to Example 2 without addition of lactoperoxidase.

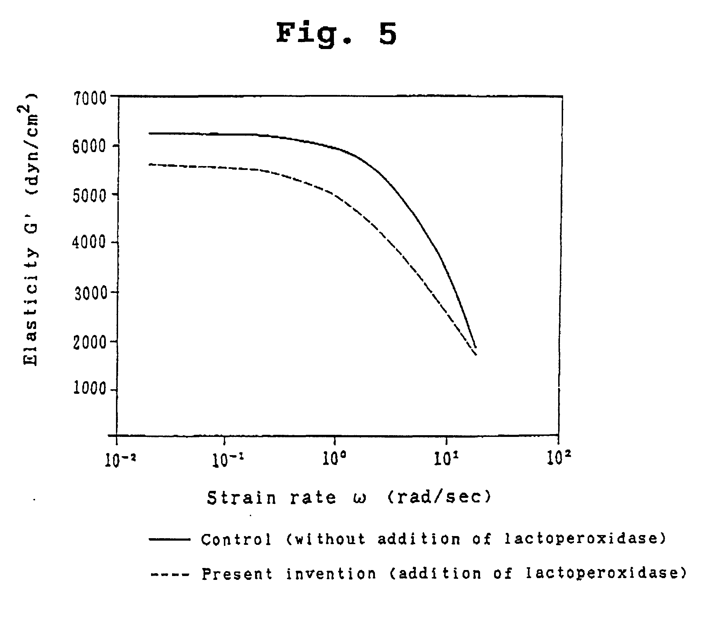

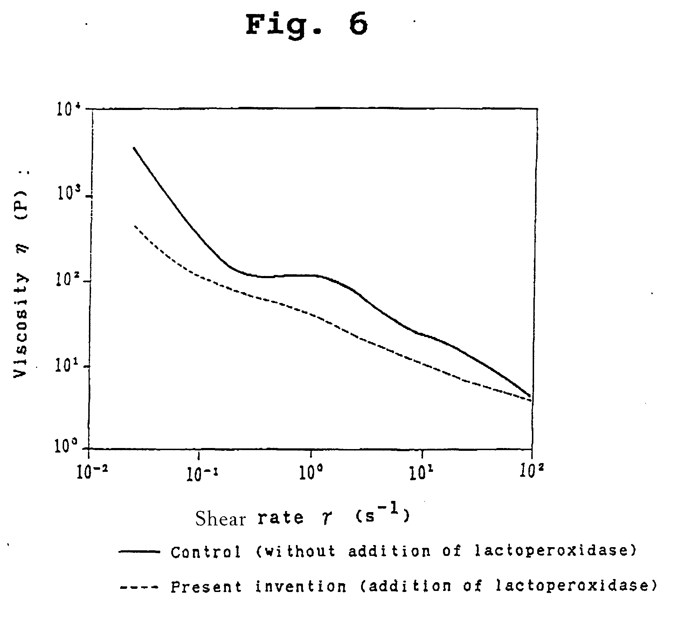

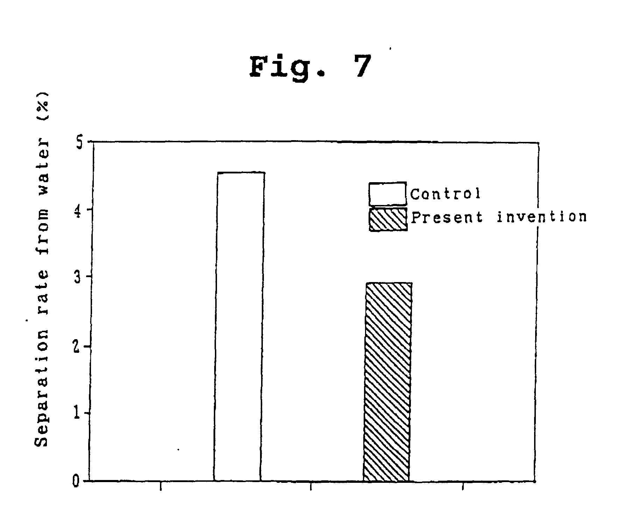

The strain dependency in dynamic elasticity, shear rate dependency of viscosity and separation rate from water, separation of whey, were determined for yogurts obtained by Example 2 and Comparative example 2 in similar manners with those of Example 1 and Comparative example 1. Fig. 5, 6 and 7 show the dynamic elasticity rate, viscosity rate and separation rate from water, respectively. All results showed similarly improved physical property by the combined addition of lactoperoxidase and WPC. The slope of lowest viscosity in the range of $\gamma = 3 \times 10^{-1}s^{-1}$-$1 \times 10^{2}S^{-1}$ applied to the equation $b=\log(\gamma_1/\gamma_2)(\eta_2/\eta_1)$ gave b = 0.22 for sample with added peroxidase and b = 0 for sample without its addition.

As shown above, the addition of peroxidase improved the physical properties of fermented milk regardless to the strain used, or presence or absence of a stabilizer.

Reference example

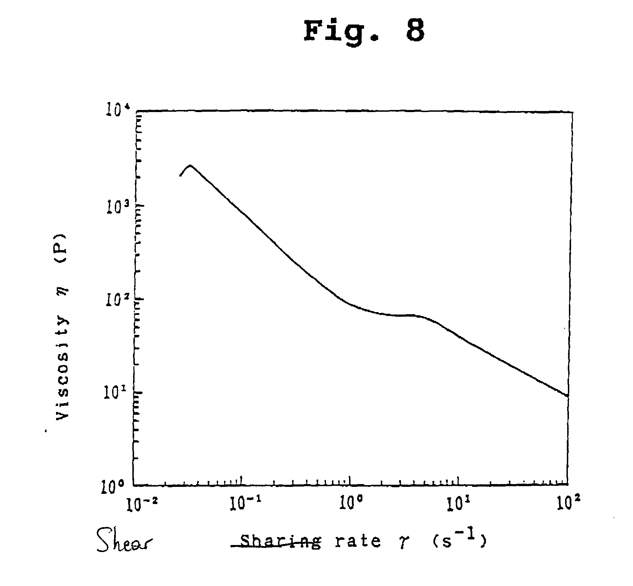

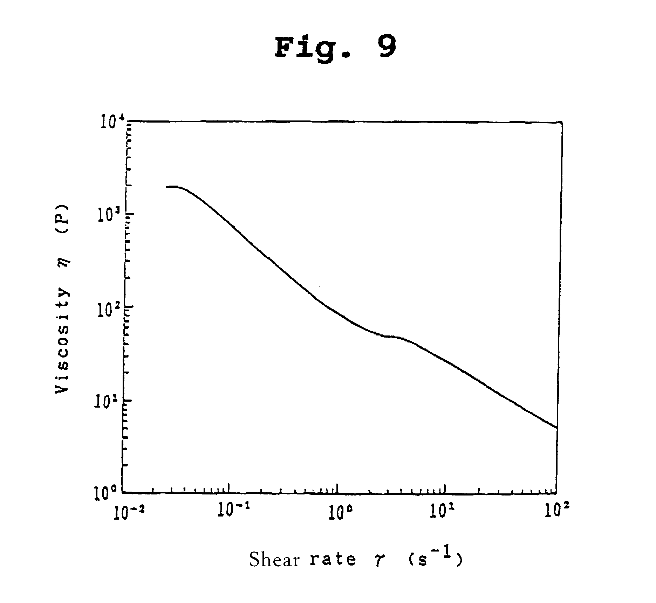

Shear rate dependency of viscosity was determined for commercial fermented milk (A) composed of 8.5% of solid mass, 1.0% of milk fat and raw materials of sucrose, gelatin, agar and flavor, and (B) composed of 8.0% of solid mass, 2.0% of milk fat and raw materials of milk, sucrose, milk product and flavor. Fig. 8 and 9 show the viscosity rates of two products. The commercial product (A) showed shear rate dependency of viscosity was lowest in the range of $\gamma$ $2 \times 10^{0}S^{-1}$-$5 \times 10^{0}S^{-1}$. The resultant slope was applied to the equation and b = 0.039 was obtained. The other commercial product (B) showed lowest sharing rate dependency in viscosity in the range of $\gamma = 3 \times 10^{0}S^{-1}$-$4 \times 10^{0}S^{-1}$. The resultant slope was applied to the equation and b = 0.081 was obtained.

Industrial Applicability

This invention provides fermented milk having lowest decline of viscosity expressed by an equation of $b=\log(\gamma_1/\gamma_2)(\eta_2/\eta_1)$ wherein b > 0.17, in the range of shear rate of $\gamma = 10^{-1}s^{-1}$-$10^{2}s^{-1}$. These fermented milk can be obtained by addition of peroxidase and WPC to yogurt mix mainly composed of milk components and fermentation with lactic acid bacteria. The resultant fermented milk has smooth construction and disintegration and flavor in the mouth without whey off.

**Claims**

1. Fermented milk comprising added peroxidase and whey potein concentrate and/or whey proteine isolate and exhibiting a viscosity change of b = $10g_{(\gamma1/\gamma2)}(\eta_2/\eta_1)$ of more than 0.17 in the shear rate dependency tests of viscosity in the shear rate ($\gamma$) from $10^{-1}s^{-1}$ to $10^{2}s^{-1}$, wherein $\gamma$ is a shear rate of the unit $s^{-1}$, $\eta$ indicates a viscosity of the unit Pa·S, $\gamma_1$ is a shear rate at one measuring point at a viscosity of $\eta_1$, and $\gamma_2$ is a shear rate at another measuring point at a viscosity of $\eta_2$, provided that $\gamma_1 < \gamma_2$. The shear rate dependency test of viscosity of fermented milk of the present invention is carried out by determination of viscosity rate in the range of r = $10^{-1}s^{-1}$-$10^{2}s^{-1}$ with a thin disk cut out at one mm thickness and 50 mm diameter, and upper plate of 50 mm titanium parallel plate in a dynamic elasticity determination apparatus (RFS-2, Rheometrics Co., Ltd.) under ambient temperature of 10°C.

2. A method for the production of fermented milk by fermentation with lactic acid bacteria according to claim 1, characterized by the fermentation of yogurt mix mainly composed of milk components with added peroxidase and whey protein concentrate and/or whey protein isolate.

3. The method for the production of fermented milk according to claim 2, wherein said milk components are composed of whole milk, skim milk or with added milk fat thereof.

4. The method for the production of fermented milk according to claim 2 or 3, wherein said whey protein concentrate (WPC) and/or whey protein isolates (WPI) are added at concentration of 0.05-3 w/w% in yogurt mix.

5. The method for the production of fermented milk according to claims 2 to 4, wherein said peroxidase is added at ratios of 0.2 unit/g or more in yogurt mix.

6. The method for the production of fermented milk according to claims 2 to 5, wherein said peroxidase is lactoperoxidase.

7. The method for the production of fermented milk according to claims 2 to 6, wherein said lactic acid bacteria are one or more bacteria selected from the group consisting of <u>Lactobacillus delbrueckii</u> subsp. <u>bulgaricus,</u> <u>Streprococcus salivarius</u> subsp. <u>thermophilus,</u> <u>Lactobacillus acidophilus,</u> <u>Streptococcus cremoris</u> and <u>Bifidobacterium</u> species.

## Revendications

1. Lait fermenté comprenant de la peroxydase ajoutée et du concentrat de protéine de lactosérum et/ou de l'isolat de protéine de lactosérum présentant une modification de la viscosité de b = $\log_{(\gamma 1/\gamma 2)} (\eta_2/\eta_1)$ de plus de 0,17 dans les tests de viscosité en fonction du taux de cisaillement avec un taux de cisaillement ($\gamma$) de
$10^{-1}s^{-1}$ a $10^2s^{-1}$, dans lequel $\gamma$ est le taux de cisaillement en unité $s^{-1}$, $\eta$ représente la viscosité en unité Pa.S, $\gamma_1$ est le taux de cisaillement en un point de mesure à la viscosité de $\eta_1$ et $\gamma_2$ est le taux de cisaillement en un autre point de mesure à la viscosité de $\eta_2$, à condition que $\gamma_1 < \gamma_2$.
Le test de la viscosité en fonction du taux de cisaillement du lait fermenté de la présente invention est effectué en déterminant la viscosité dans l'intervalle de $\gamma = 10^{-1}s^{-1}$ - $10^2s^{-1}$ avec un disque mince découpé à une épaisseur de un mm et un diamètre de 50 mm, et une plaque supérieure de titane de 50 mm parallèle dans un appareil de mesure de l'élasticité dynamique (RFS-2, Rheometrics Co., Ltd.) à une température ambiante de 10°C.

2. Procédé de production de lait fermenté par fermentation avec des bactéries acides lactiques selon la revendication 1, caractérisé par la fermentation du mélange de yaourt principalement composé de composants de lait avec une addition de peroxydase et de concentrat de protéine de lactosérum et/ou d'isolat de protéine de lactosérum.

3. Procédé de production de lait fermenté selon la revendication 2, dans lequel lesdits composants de lait sont constitués de lait entier, de lait écrémé ou avec un ajout de graisse lactée de celui-ci.

4. Procédé de production de lait fermenté selon la revendication 2 ou 3, dans lequel ledit concentrat de protéine de lactosérum (WPC) et/ou isolat de protéine de lactosérum (WPI) sont ajoutés en une concentration de 0,05-3 % en poids du mélange de yaourt.

5. Procédé de production de lait fermenté selon les revendications 2 à 4, dans lequel ladite peroxydase est ajoutée en des proportions de 0,2 unité/g ou plus dans le mélange de yaourt.

6. Procédé de production de lait fermenté selon les revendications 2 à 5, dans lequel ladite peroxydase est la lactoperoxydase.

7. Procédé de production de lait fermenté selon les revendications 2 à 6, dans lequel lesdites bactéries acides lactiques sont une ou plusieurs bactéries choisies dans le groupe constitué des espèces <u>Lactobacillus delbrueckii</u> subsp. <u>bulgaricus,</u> <u>Streptococcus salivarius</u> subsp. <u>thermophilus,</u> <u>Lactobacillus acidophilus,</u> <u>Streptococcus cremoris</u> et <u>Bifidobacterium.</u>

## Patentansprüche

1. Fermentierte Milch, zugefügte Peroxidase und Molkenproteinkonzentrat und/oder Molkenproteinisolat umfassend und eine Viskositätsänderung b = $\log_{(\gamma 1/\gamma 2)} (\eta_2/\eta_1)$ von mehr als 0,17 bei den Untersuchungen zur Abhängigkeit der Viskosität von der Schergeschwindigkeit bei einer Schergeschwindigkeit ($\gamma$) von $10^{-1}$ $s^{-1}$ bis $10^2$ $s^{-1}$ aufweisend, worin $\gamma$ eine Schergeschwindigkeit der Einheit $s^{-1}$ ist, $\eta$ eine Viskosität der Einheit Pa·s anzeigt, $\gamma_1$ eine Schergeschwindigkeit an einem Meßpunkt bei einer Viskosität von $\eta_1$ ist und $\gamma_2$ eine Schergeschwindigkeit an einem anderen Meßpunkt bei einer Viskosität von $\eta_2$ ist, unter der Maßgabe, dass $\gamma_1 < \gamma_2$. Die Untersuchung der Abhängigkeit der Viskosität der fermentierten Milch der vorliegenden Erfindung von der Schergeschwindigkeit wird durch Bestimmung der Viskosität im Bereich von $\gamma = 10^{-1}$ $s^{-1}$ bis $10^2$ $s^{-1}$ mit einer dünnen Scheibe, die mit 1 mm Dicke und 50 mm Durchmesser ausgeschnitten wurde und einer oberen Platte einer parallelen 50 mm Titanplatte in einem Apparat zur Bestimmung der dynamischen Elastizität (RFS-2, Rheometrics Co., Ltd.) bei einer Umgebungstemperatur von 10 °C, durchgeführt.

2. Ein Verfahren zur Herstellung fermentierter Milch durch Fermentation mit Milchsäurebakterien gemäß Anspruch 1, gekennzeichnet durch die Fermentation einer Yoghurtmischung, hauptsächlich bestehend aus Milchkomponenten mit zugefügter Peroxidase und Molkenproteinkonzentrat und/oder Molkenproteinisolat.

3. Das Verfahren zur Herstellung fermentierter Milch nach Anspruch 2, worin besagte Milchkomponenten aus Vollmilch, Magermilch oder zugefügtem Milchfett daraus, bestehen.

4. Das Verfahren zur Herstellung fermentierter Milch nach Anspruch 2 oder 3, worin besagtes Molkenproteinkonzentrat (MPK) und/oder Molkenproteinisolate (MPI) auf eine Konzentration von 0,05 bis 3 Gew.-% der Yoghurt-Mischung zugefügt werden.

**5.** Das Verfahren zur Herstellung von fermentierte Milch nach Ansprüchen 2 bis 4, worin besagte Peroxidase der Yoghurt-Mischung im Verhältnis von 0,2 Einheiten/g oder mehr zugefügt ist.

**6.** Das Verfahren zur Herstellung von fermentierter Milch nach Ansprüchen 2 bis 5, worin besagte Peroxidase Laktoperoxidase ist.

**7.** Das Verfahren zur Herstellung fermentierter Milch nach Ansprüchen 2 bis 6, worin besagte Milchsäurebakterien ein oder mehrere Bakterien sind, gewählt aus der Gruppe bestehend aus Lactobacillus delbrueckii subsp. bulgaricus, Streptococcus salivarius subsp. thermophilus, Lactobacillus acidophilus, Streptococcus cremoris und Bifidobacterium-Species.

# Fig. 1

Control (without addition of lactoperoxidase)

Present invention (addition of lactoperoxidase)

# Fig. 2

Control (without addition of lactoperoxidase)

Present invention (addition of lactoperoxidase)

# Fig. 3

# Fig. 4

Time (min.)

———— Control (without addition of lactoperoxidase)

---- Present invention (addition of lactoperoxidase)

# Fig. 5

Strain rate ω (rad/sec)

―――― Control (without addition of lactoperoxidase)

―――― Present invention (addition of lactoperoxidase)

# Fig. 6

Shear rate $\gamma$ (s$^{-1}$)

——— Control (without addition of lactoperoxidase)

---- Present invention (addition of lactoperoxidase)

# Fig. 7

# Fig. 8

# Fig. 9